# EUROPÄISCHE PATENTSCHRIFT

(11) **EP 1 841 610 B1**
(45) Veröffentlichungstag und Bekanntmachung des Hinweises auf die Patenterteilung: **09.06.2010**
(21) Anmeldenummer: 06706386.7
(22) Anmeldetag: 24.01.2006
(51) Int. Cl.: B60J 5/04

(54) **AGGREGATETRÄGER MIT FENSTERSCHEIBENFÜHRUNGSSCHIENEN FÜR EINE KRAFTFAHRZEUGTÜR**
UNIT SUPPORT COMPRISING WINDOW PANE GUIDE RAILS FOR A MOTOR VEHICLE DOOR
SUPPORT DE BLOC A GLISSIERES DE GUIDAGE DE VITRE POUR UNE PORTIERE DE VEHICULE AUTOMOBILE

(30) Priorität: 25.01.2005 DE 202005001225 U
(43) Veröffentlichungstag der Anmeldung: 10.10.2007
(73) Patentinhaber: Integración De Montajes Y Plásticos, S.L., 20130 Urnieta Guipuzcoa (ES)
(72) Erfinder: BERBNER, Jürgen, 38524 Neudorf-Platendorf (DE)
(74) Vertreter: Cohausz & Florack
(86) Internationale Anmeldenummer: PCT/EP2006/000605
(87) Internationale Veröffentlichungsnummer: WO 2006/079506

(56) Entgegenhaltungen:
- EP-A- 0 974 478
- EP-A- 1 314 598
- DE-A1- 10 126 218
- DE-A1- 10 164 187

## Beschreibung

Die Erfindung betrifft einen Aggregateträger für eine Kraftfahrzeugtür, mit Führungsschienen zur Führung einer heb- und senkbaren Fensterscheibe, wobei mindestens eine der Führungsschienen schwenkbar an dem Aggregateträger angeordnet ist, so dass sie aus einer Transportposition in eine Funktionsposition verschwenkbar ist.

Derartige Aggregateträger dienen als Träger für verschiedene Funktionskomponenten einer Kraftfahrzeugtür, beispielsweise als Träger für einen Fensterhebermechanismus, einen Türschließ- und -öffnungsmechanismus, einen Fensterhebermotor, einen oder mehrere Lautsprecher, ein Airbag-Modul und/oder weitere Funktionskomponenten. Ein mit solchen Funktionskomponenten vormontierter Aggregateträger wird als sogenanntes Türmodul in die Fahrzeugtür eingebaut. Der Aggregateträger wird dabei üblicherweise mit dem Türinnenblech der Fahrzeugtür verbunden und später mit einer dekorativen Türinnenverkleidung verkleidet.

Ein Aggregateträger mit integrierten Fensterscheibenführungsschienen ist z.B. aus der EP 0 561 440 Bl bekannt. Der bekannte Aggregateträger ist ein Kunststoffformteil, das eine im wesentlichen ebene Trägerplatte mit mehreren davon abstehenden, voneinander beabstandeten rohrförmigen Speichen umfasst. Die hohlen, Speichen tragen kanalförmige Führungsschienen, die im Gebrauch die Ränder einer Fahrzeugfensterscheibe aufnehmen. Die Führungsschienen, die Speichen und die Trägerplatte sind dabei einstückig ausgebildet. Die Führungsschienen und die speichen begrenzen größere Öffnungen (Durchbrüche), so dass der Aggregateträger nicht ohne weiteres die Funktion einer Feuchtigkeitsbarriere, welche den sogenannten Nassbereich vom Trockenbereich der Fahrzeugtür trennt, übernehmen kann. Zudem ist dieser bekannte Aggregateträger aufgrund seiner integrierten Fensterscheibenführungsschienen vergleichsweise sperrig, so dass sich seine Montage an der entsprechenden Fahrzeugtür schwierig gestalten dürfte.

Die DE 101 64 187 A offenbart ein Türmodul mit einer Fensterhebereinrichtung, die zwei Führungsschienen umfasst, die mittels eines Grundteils gelenkig miteinander verbunden sind und somit zwischen einer Vormontagelage und einer Endlage verschwenkbar sind. Das Grundteil besteht aus einer Platte, die mit einer umlaufenden Dichtung versehen ist, so dass durch die Platte eine in einem Türblech vorgesehene Einbauöffnung verschließbar ist.

Auch aus der EP 1 314 598 A ist ein Türmodul mit einer auf eine Öffnung eines Türblechs einer Kraftfahrzeug aufsetzbaren Platte bekannt. Auf der Platte ist eine Fensterhebereinrichtung mit einem in einer Schiene zwangsgeführten Schlitten gehalten. Der Schlitten dient der Befestigung einer Fensterscheibe. Die Schiene der Fensterhebereinrichtung ist in einem Vormontagezustand ungefähr parallel zu einer zwischen zwei gegenüberliegenden Ecken der Platte verlaufenden Diagonalen der Platte orientiert. Die Fensterhebereinrichtung ist dabei um einen Drehpunkt herum drehbar auf der Platte gelagert.

Die DE 101 26 218 A zeigt ein Türaufprallträger-Modul für eine Kraftfahrzeugtür, das ein in die Kraftfahrzeugtür eingegliedertes Längsprofil aufweist, welches als Träger für Türeinbaukomponenten, nämlich die Fensterheber, das Türschloss und den Fensterhebergetriebemotor, ausgebildet ist. Die Fensterheber sind dabei auf dem Längsprofil schwenkbar gehalten. Nach Montage des Türaufprallträger-Moduls in einer Kraftfahrzeugtür können die Fensterheber in ihre Arbeitsposition geschwenkt werden.

Der vorliegenden Erfindung liegt die Aufgabe zugrunde, einen Aggregateträger der eingangs genannten Art zur Verfügung zu stellen, der eine erleichterte Montage eines entsprechend vorgefertigten Türmoduls in der zugeordneten Kraftfahrzeugtür ermöglicht, und zwar insbesondere auch dann, wenn der Aggregateträger als flächige Feuchtigkeitsbarriere ausgebildet ist.

Erfindungsgemäß wird diese Aufgabe durch einen Aggregateträger mit den Merkmalen des Anspruchs 1 gelöst. Der erfindungsgemäße Aggregateträger ist im wesentlichen dadurch gekennzeichnet, dass eine seiner Führungsschienen schwenkbar an ihm angeordnet ist, so dass diese Führungsschiene aus einer Transportposition in eine Funktionsposition verschwenkbar ist, während eine andere der Fensterscheibenführungsschienen einstückig an dem Aggregateträger angeformt ist. Die verschwenkbare Führungsschiene und/oder der Aggregateträger weisen dabei mindestens ein Sicherungsmittel auf, mit dem die verschwenkbare Führungsschiene in der Transportposition an dem Aggregateträger gegen ein Verschwenken in die Funktionsposition sicherbar ist.

Durch die Integration bzw. Vormontage der Führungsschienen an dem Aggregateträger reduziert sich die Anzahl der beim Transport und einer eventuellen Lagerung separat zu handhabenden Bauteile. Ferner wird durch diesen erhöhten Integrationsgrad die Montage des den Aggregateträger umfassenden Türmoduls erheblich verbessert, wobei die Vormontage und Anordnung der verschwenkbaren Führungsschiene in der Transportposition die Montage des Aggregateträger bzw. Türmoduls vorteilhaft vereinfacht.

Das der Sicherung der schwenkbar vormontierten Führungsschiene in der Transportposition dienende Sicherungsmittel ist nach einer bevorzugten Ausgestaltung der Erfindung aus einem Haken- oder Klemmelement gebildet. Das Hakenelement ist vorzugsweise mit der verschwenkbaren Führungsschiene verbunden und in eine Öffnung oder an einem Vorsprung am Aggregateträger einhängbar.

Eine weitere bevorzugte Ausgestaltung des erfindungsgemäßen Aggregateträgers besteht darin, dass die daran verschwenkbar vormontierte Führungsschiene mit einem ersten Element eines Schwenkgelenks versehen ist, das mit einem am Aggregateträger vorgesehenen zweiten Schwenkgelenkelement lösbar verbindbar ist.

Um die Führungsschiene auf einfache Weise mit dem Aggregateträger verbinden zu können und eine zuverlässige Verbindung sowohl in der Transportposition als auch später in der Funktionsposition zu gewährleisten, ist nach einer weiteren Ausgestaltung der Erfindung vorgesehen, dass eines der beiden Schwenkgelenkelemente als Gelenkzapfen ausgebildet ist, der an seinem Kopfende mindestens einen radial abstehenden Vorsprung aufweist, wobei das andere Schwenkgelenkelement aus einer Öffnung besteht, die mindestens einen dem Vorsprung des Gelenkzapfens zugeordneten Erweiterungsbereich aufweist, wobei der Erweiterungsbereich der Öffnung und der radial abstehende Vorsprung des Gelenkzapfens im Verhältnis zueinander so ausgerichtet sind, dass die beiden Schwenkgelenkelemente miteinander nur in einer Position relativ zueinander formschlüssig verbindbar sind, die weder der Transportposition noch der Funktionsposition (Montageposition) der verschwenkbaren Führungsschiene entspricht.

Um die verschwenkbare Führungsschiene schließlich in ihrer Funktionsposition an der zugeordneten Kraftfahrzeugtür auf einfache Weise sicher montieren zu können, wird ferner vorgeschlagen, an der Führungsschiene einen Befestigungsabschnitt auszubilden, der mindestens ein Befestigungsmittel umfasst. Das Befestigungsmittel, beispielsweise ein in einer Öffnung des Innenblechs der Fahrzeugtür verrastbarer Steckzapfen, Steckbolzen oder Vorsprung, ist dabei vorzugsweise einstückig an der Führungsschiene angeformt.

Weitere bevorzugte und vorteilhafte Ausgestaltungen der Erfindung sind in den Unteransprüchen angegeben.

Nachfolgend wird Erfindung anhand einer ein Ausführungsbeispiel darstellenden Zeichnung näher erläutert. Es zeigen schematisch:
- Fig. 1: eine Seitenansicht eines erfindungsgemäßen Aggregateträgers mit einer einstückig integrierten Fensterscheibenführungsschiene und einer verschwenkbaren Fensterscheibenführungsschiene, wobei letztere in einer Stellung gezeigt ist, in welcher sie mit einem Gelenkzapfen des Aggregateträgers verbindbar ist;
- Fig. 2: eine Seitenansicht des Aggregateträgers gemäß Fig. 1, wobei die verschwenkbare Fensterscheibenführungsschiene in einer eingeschwenkten Transportposition gesichert ist;
- Fig. 3: eine Seitenansicht eines Abschnitts eines Türinnenblechs mit dem Aggregateträger gemäß Fig. 1, wobei die verschwenkbare Fensterscheibenführungsschiene noch in der Transportposition gesichert ist;
- Fig. 4: eine Seitenansicht des Fahrzeugtürinnenblechs mit dem Aggregateträger gemäß Fig. 3, wobei die verschwenkbare Fensterscheibenführungsschiene in ihre Funktionsposition (Endmontageposition) ausgeschwenkt ist;
- Fig. 5: eine vergrößerte Detaildarstellung eines Schwenkgelenks zur Vormontage der verschwenkbaren Fensterscheibenführungsschiene an dem Aggregateträger, wobei die Führungsschiene in der Stellung gemäß Fig. 1 gezeigt ist,
- Fig. 6: eine vergrößerte Detaildarstellung entsprechend Fig. 5, wobei sich die Führungsschiene in der Transportposition gemäß den Figuren 2 und 3 befindet;
- Fig. 7: eine vergrößerte Detaildarstellung eines an der Führungsschiene ausgebildeten Sicherungsmittels zu deren Sicherung in der Transportposition gemäß den Figuren 2 und 3 sowie eines Befestigungsabschnitts zur Befestigung der Führungsschiene in ihrer Funktionsposition (Endmontageposition);
- Fig. 8: eine vergrößerte Detaildarstellung entsprechend den Figuren 5 und 6, wobei die Führungsschiene in ihrer Funktionsposition (Endmontageposition) gemäß Fig. 4 angeordnet ist;
- Fig. 9: eine Detaildarstellung eines Abschnitts des Aggregateträgers mit der daran einstückig integrierten Fensterscheibenführungsschiene in perspektivischer Ansicht; und
- Fig. 10: eine Schnittdarstellung eines Abschnitts des Aggregateträgers mit der daran einstückig integrierten Fensterscheibenführungsschiene.

Der in der Zeichnung dargestellte Aggregateträger 1 dient als Träger für verschiedene Funktionskomponenten einer Kraftfahrzeugtür 2. Er dient insbesondere als Träger für Teile eines Fensterhebermechanismus. Der Aggregateträger 1 ist mit Befestigungsmitteln, z.B. mit einstückig integrierten Gewindehülsen und/oder verrastbaren Bolzen versehen, an denen Funktionskomponenten der Fahrzeugtür vor der Montage des Aggregateträgers 1 als Türmodul befestigt werden.

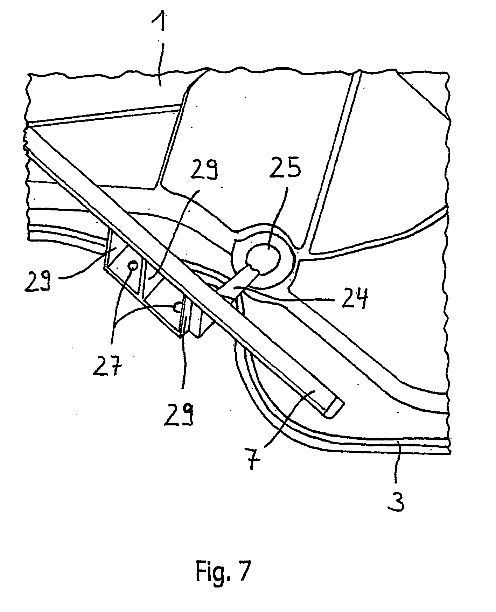

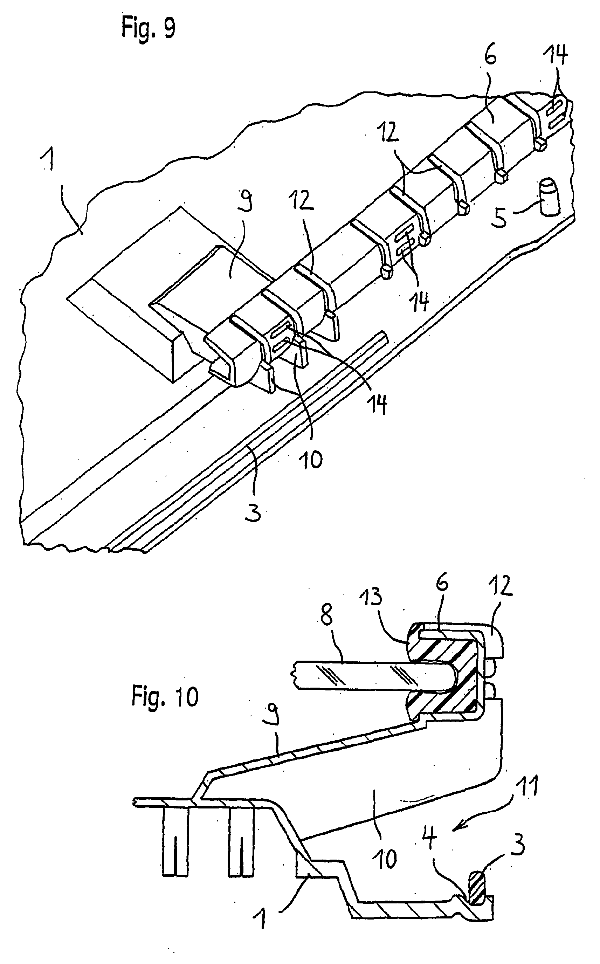

Der erfindungsgemäße Aggregateträger 1 ist zudem als Feuchtigkeitsbarriere ausgebildet. Er trennt den sogenannten Naßbereich der Kraftfahrzeugtür 2 von deren Trockenbereich und weist hierzu randseitig eine schnurförmige, gummielastische Dichtung 3 auf (vgl. Figuren 7, 9 und 10). Die wulstartige Dichtung 3, die aus Butyl oder einem anderen geeigneten Elastomer besteht, ist vorzugsweise in einer Nut 4 eingeklebt oder verankert. Am Randbereich des Aggregateträgers 1 sind mehrere Durchbrechungen ausgebildet, die der Aufnahme von mit dem Innenblech der Kraftfahrzeugtür 2 verbindbaren Schrauben 5 oder anderer Befestigungsmittel dienen (vgl. Fig. 9).

Der Aggregateträger ist vorzugsweise ein Kunststoffformteil, das im Thermo-Schaumguß-Verfahren hergestellt ist. Über seinen Querschnitt betrachtet weist der Aggregateträger eine zellige Kernzone (Schaumstruktur) auf, die in zellfreie, flüssigkeitsdichte Randzonen übergeht. Er zeichnet sich daher durch ein relativ geringes Gewicht bei hoher Biegesteifigkeit sowie hoher Torsionssteifigkeit aus. Zapfen und/oder andere vorstehende Befestigungselemente, die an dem Aggregateträger einstückig angeformt werden, können im Thermo-Schaumguß-Verfahren in Vollkunststoff ausgeführt werden.

Der Aggregateträger 1 ist mit zwei Fensterführungsschienen 6, 7 zur Führung einer heb- und senkbaren Fensterscheibe 8 versehen. Die in Fahrtrichtung gesehen hintere Fensterführungsschiene 6 ist fest mit dem Aggregateträger 1 verbunden. Bei der Führungsschiene 6 kann es sich um ein separat hergestelltes Bauteil handeln, das mit dem Aggregateträger 1 durch Verschweißen fest verbunden wird. Vorzugsweise ist die Fensterführungsschiene 6 aber einstückig an dem Aggregateträger 1 angespritzt. Die Führungsschiene 6 ist mit mindestens zwei vom Aggregateträger 1 schräg abstehenden Haltern 9 versehen, so dass die Führungsschiene 6 beabstandet zum Aggregateträger 1 in der Ebene der zu führenden Fensterscheibe 8 angeordnet ist. Der in Fig. 10 dargestellte Halter 9 weist mindestens eine Verstärkungsrippe 10 auf. Die Verstärkungsrippe ist dem Aggregateträger 1 zugewandt und geht vorzugsweise einstückig in diesen über. Die Halter 9 sind so ausgebildet, dass zwischen der Führungsschiene 6 und dem Rand des Aggregateträgers 1 ein länglicher Freiraum 11 vorhanden ist, in den der Randbereich der durch den Aggregateträger 1 abzudeckenden Öffnung des Innenblechs der Fahrzeugtür 2 aufgenommen wird. Im montierten Zustand des Aggregateträgers 1 liegt dessen Dichtung 3 am Randbereich der Türinnenblechöffnung an.

Die Führungsschiene 6 besteht aus einem im Querschnitt U-förmigen Kanal. An der Außenseite der Führungsschiene 6 sind mehrere Verstärkungsrippen 12 ausgebildet, die quer zur Längsachse der Führungsschiene 6 verlaufen (vgl. Fig. 9). In der Führungsschiene 6 ist eine die Fensterscheibe 8 umgreifende Dichtung 13 aus Gummi oder dergleichen formschlüssig aufgenommen und/oder verrastet (Fig. 10). Wie in Fig. 9 gezeigt, weist die Fensterführungsschiene 6 mehrere Durchbrechungen 14 auf, die der Verrastung der Fensterdichtung 13 dienen.

Bei der in Fahrtrichtung gesehen vorderen Fensterführungsschiene 7 handelt es sich um ein gegenüber dem Aggregateträger 1 separat hergestelltes Bauteil. Sie wird vorzugsweise als Kunststoffspritzgussteil hergestellt. Sie kann jedoch grundsätzlich auch als Blechformteil ausgeführt sein.

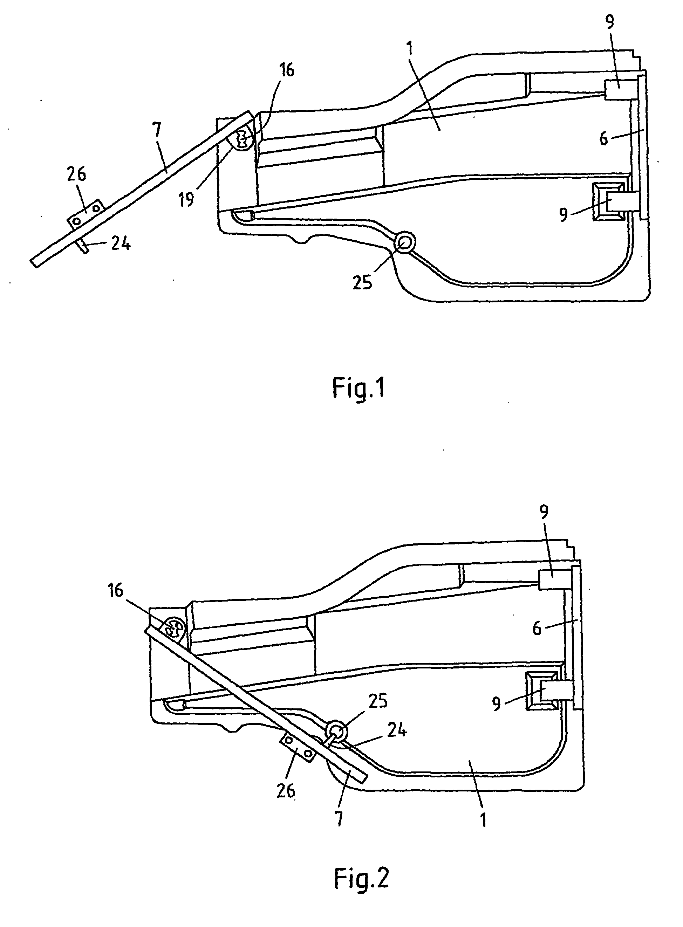

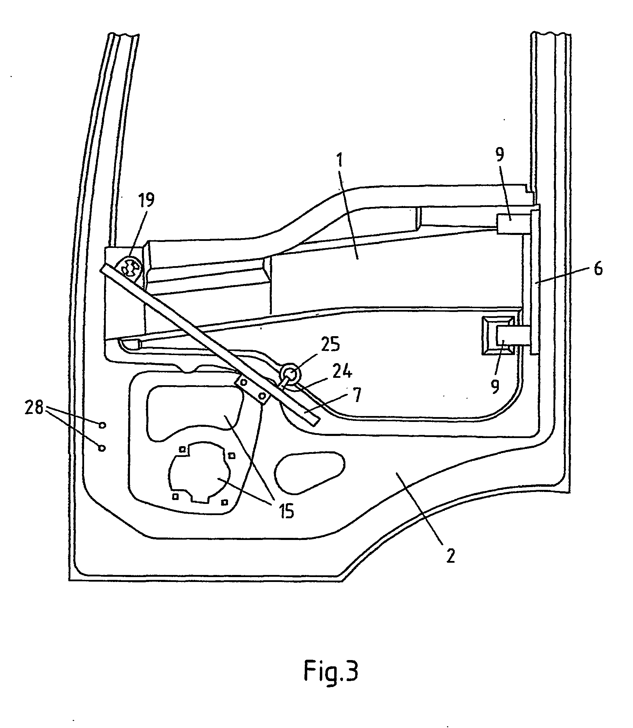

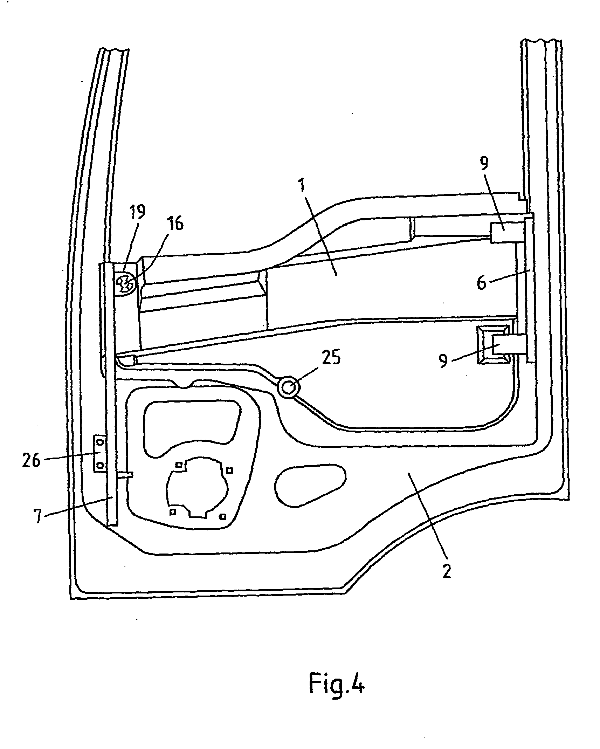

Die Fensterführungsschiene 7 lässt sich schwenkbar mit dem Aggregateträger 1 verbinden, so dass sie aus einer Transportposition in eine Funktionsposition verschwenkbar ist. Die Transportposition ist in den Figuren 2 und 3 gezeigt, während die Endmontageposition bzw. Funktionsposition, d.h. die Position, in welcher die Führungsschiene an der Kraftfahrzeugtür 2 montiert wird und in welcher sie als Führung für die heb- und senkbare Fensterscheibe 8 fungiert, in Fig. 4 dargestellt ist. Von der dem Aggregateträger 1 zugeordneten Kraftfahrzeugtür 2 ist in Fig. 4 lediglich ein Abschnitt dargestellt. In dem Türinnenblech sind Öffnungen 15 ausgestanzt, die der Aufnahme und Montage von Funktionskomponenten, insbesondere eines Fensterhebermotors (nicht gezeigt) dienen.

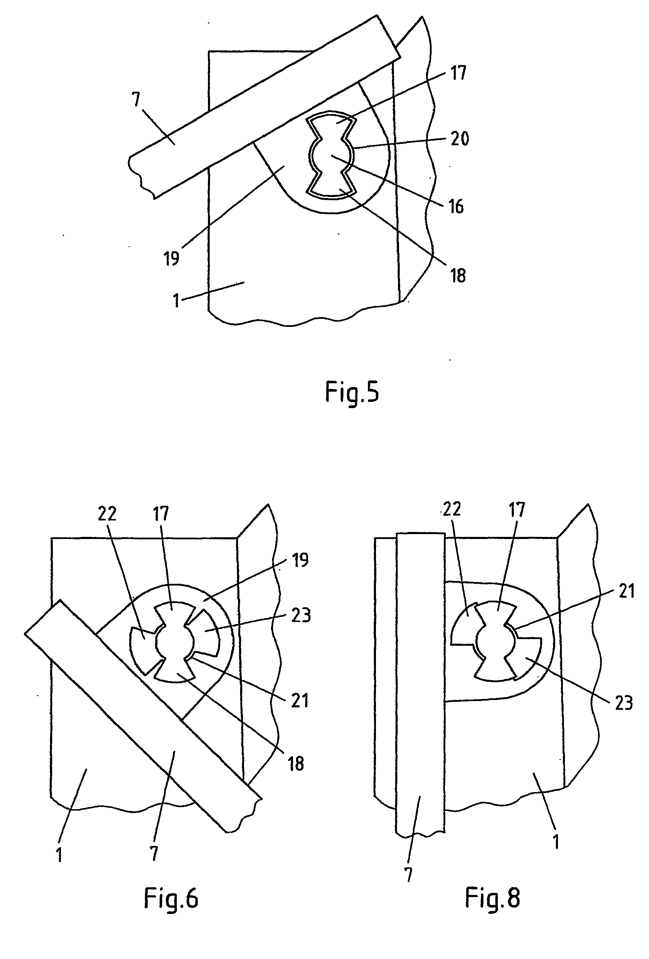

Zur Realisierung der Schwenkverbindung ist die Führungsschiene 7 mit einem ersten Element eines Schwenkgelenks versehen, das mit einem an dem Aggregateträger 1 vorgesehenen zweiten Schwenkgelenkelement lösbar verbindbar ist. In dem dargestellten Ausführungsbeispiel weist der Aggregateträger 1 einen Gelenkzapfen 16 auf, an dessen Kopfende zwei radial abstehende Vorsprünge 17, 18 ausgebildet sind (vgl. Fig. 5). Der Gelenkzapfen 16 besteht aus kompakten Vollkunststoff. Die Breite der flügelförmigen Vorsprünge 17, 18 nimmt zu ihren kreisbogenförmigen Außenrändern hin zu. Die Form der diametral gegenüberliegenden Vorsprünge 17, 18 entspricht der Form von Segmenten einer kreisförmigen Ringscheibe.

Auch die Fensterführungsschiene 7 ist kanalförmig ausgebildet. An dem dem Aggregateträger 1 zugewandten Steg des im Querschnitt betrachtet U-förmigen Kanals ist ein laschenartiger Ansatz 19 mit einer Öffnung (Durchbrechung) 20 vorgesehen. Die Form der Öffnung 20 entspricht der Form des Kopfendes des Gelenkzapfens 16, wobei die Öffnung 20 geringfügig größer als das Kopfende des Gelenkzapfens 16 ist (Spielpassung). Die Öffnung 20 weist somit einen mittleren, im wesentlichen kreisrunden Öffnungsabschnitt 21 auf, an den sich Erweiterungsbereiche 22, 23 anschließen, die den flügelförmigen Vorsprüngen 17, 18 des Gelenkzapfens 16 zugeordnet sind. Der laschenartige Ansatz 19 liegt nahe dem oberen Ende der Fensterführungsschiene 7.

Die Erweiterungsbereiche 22, 23 der Öffnung 20 und die flügelförmigen Vorsprünge 17, 18 des Gelenkzapfens 16 sind im Verhältnis zueinander so ausgerichtet, dass der Gelenkzapfen 16 und der laschenförmige Ansatz 19 mit der Öffnung 20 nur in einer Position oder nur in einem eng begrenzten Positionsbereich relativ zueinander formschlüssig verbindbar sind, die/der weder der Transportposition noch der Funktionsposition der verschwenkbaren Führungsschiene 7 entspricht. Wenn der laschenartigen Ansatz 19 der Führungsschiene 7 auf den Gelenkzapfen 16 aufgesteckt ist, wird somit sichergestellt, dass sich die Führungsschiene 7 weder in ihrer Transportposition gemäß Fig. 2 noch in ihrer Funktionsposition (Endmontage-position) gemäß Fig. 4 noch in dem dazwischen liegenden Schwenkbereich von dem Gelenkzapfen 16 löst.

Die Fensterführungsschiene 7 lässt sich in ihrer Transportposition an dem Aggregateträger 1 gegen ein Verschwenken in die Funktionsposition sicheren. Hierzu weist die Fensterführungsschiene 7 ein Sicherungsmittel in Form eines Hakenelements 24 auf, das in eine an dem Aggregateträger 1 vorgesehene Öffnung 25 einhängbar ist (vgl. Figuren 1 und 7).

Der Aggregateträger 1 ist mit der in die Transportposition eingeschwenkten Fensterführungsschiene 7 wesentlich einfacher zu handhaben, insbesondere einfacher in der Fahrzeugtür 2 zu montieren.

Nachdem der Aggregateträger 1 mit der in die Transportposition eingeschwenkten Fensterführungsschiene 7 in seiner Montagestellung an dem Innenblech der Fahrzeugtür 2 angeordnet und an dem Innenblech mittels Schrauben oder dergleichen fixiert ist (siehe Fig. 3), wird das Hakenelement 24 der Fensterführungsschiene 7 aus der zugeordneten Öffnung 25 des Aggregateträgers 1 ausgehängt und die Fensterführungsschiene 7 in ihre Funktionsposition geschwenkt und am Innenblech der Fahrzeugtür 2 befestigt (Fig. 4). Hierzu ist an der Fensterführungsschiene 7 ein Befestigungsabschnitt 26 ausgebildet, der mindestens eine Ausnehmung oder Öffnung zur Aufnahme eines Befestigungsmittels aufweist. In dem dargestellten Ausführungsbeispiel weist der Befestigungsabschnitt 26 zwei Öffnungen (Bohrungen oder Durchbrüche) 27 auf, denen zwei entsprechende Öffnungen im Innenblech der Fahrzeugtür 2 zugeordnet sind. Als Befestigungsmittel (nicht gezeigt) können beispielsweise Blechschrauben oder Nieten verwendet werden. Die dem Hakenelement 24 zugeordnete Öffnung 25 im Aggregateträgers 1 kann mit einem geeigneten Verschluss abgedichtet werden.

Wie in Fig. 7 zu erkennen ist, ist auch der Befestigungsabschnitt 26 an dem dem Aggregateträger 1 zugewandten Steg der kanalförmigen Fensterführungsschiene 7 angeordnet. Der Befestigungsabschnitt 26 ist über mehrere Querrippen 29 einstückig an der Führungsschiene 7 angeformt. Das Hakenelement 24 ist ebenfalls einstückig an der Führungsschiene 7 angeformt.

Die Erfindung ist in ihrer Ausführung nicht auf das vorstehend beschriebene Ausführungsbeispiel beschränkt. Vielmehr sind mehrere Varianten möglich, die auch bei grundsätzlich abweichender Gestaltung von der in den Ansprüchen angegebenen Erfindung Gebrauch machen. So kann beispielsweise anstelle eines Hakenelements 24 auch ein Klemmelement an dem Aggregateträger 1 zur Sicherung der verschwenkbaren Fensterführungsschiene 7 in ihrer Transportposition vorgesehen werden.

## Patentansprüche

1. Aggregateträger (1) für eine Kraftfahrzeugtür, mit Führungsschienen (6, 7) zur Führung einer heb- und senkbaren Fensterscheibe, wobei mindestens eine (7) der Führungsschienen schwenkbar an dem Aggregateträger (1) angeordnet ist, so dass sie aus einer Transportposition in eine Funktionsposition verschwenkbar ist, **dadurch gekennzeichnet, dass** die verschwenkbare Führungsschiene (7) und/oder der Aggregateträger (1) mindestens ein Sicherungsmittel (24) aufweisen, mit dem die verschwenkbare Führungsschiene (7) in der Transportposition an dem Aggregateträger (1) gegen ein Verschwenken in die Funktionsposition sicherbar ist, und dass eine andere (6) der Fensterscheibenführungsschienen einstückig an dem Aggregateträger (1) angeformt ist.

2. Aggregateträger nach Anspruch 1,
**dadurch gekennzeichnet, dass** das Sicherungsmittel aus einem Klemm- oder Hakenelement (24) gebildet ist.

3. Aggregateträger nach Anspruch 1 oder 2,
**dadurch gekennzeichnet, dass** das Sicherungsmittel aus einem mit der Führungsschiene (7) verbundenen Hakenelement (24) gebildet ist, das in eine an dem Aggregateträger (1) vorgesehene Öffnung (25) oder an einem an dem Aggregateträger (1) vorgesehenen Vorsprung einhängbar ist.

4. Aggregateträger nach einem der Ansprüche 1 bis 3,
**dadurch gekennzeichnet, dass** die verschwenkbare Führungsschiene (7) mit einem ersten Element (19, 20) eines Schwenkgelenks versehen ist, das mit einem an dem Aggregateträger (1) vorgesehenen zweiten Schwenkgelenkelement (16) lösbar verbindbar ist.

5. Aggregateträger nach Anspruch 4,
**dadurch gekennzeichnet, dass** eines der beiden Schwenkgelenkelemente als Gelenkzapfen (16) ausgebildet ist, der an seinem Kopfende mindestens einen radial abstehenden Vorsprung (17, 18) aufweist, und dass das andere der beiden Schwenkgelenkelemente aus einer Öffnung (20) besteht, die mindestens einen dem Vorsprung (17, 18) des Gelenkzapfens (16) zugeordneten Erweiterungsbereich (22, 23) aufweist, wobei der Erweiterungsbereich (22, 23) der Öffnung (20) und der Vorsprung (17, 18) des Gelenkzapfens (16) im Verhältnis zueinander so ausgerichtet sind, dass die beiden Schwenkgelenkelemente (16, 20) miteinander nur in einer Position relativ zueinander formschlüssig verbindbar sind, die weder der Transportposition noch der Funktionsposition der verschwenkbaren Führungsschiene (7) entspricht.

6. Aggregateträger nach einem der Ansprüche 1 bis 5,
**dadurch gekennzeichnet, dass** die verschwenkbare Führungsschiene (7) einen Befestigungsabschnitt (26) aufweist, der der Befestigung der Führungsschiene (7) in deren Funktionsposition an einer zugeordneten Kraftfahrzeugtür (2) dient und mindestens eine Ausnehmung oder Öffnung (27) zur Aufnahme eines Befestigungsmittels aufweist.

7. Aggregateträger nach einem der Ansprüche 1 bis 5,
**dadurch gekennzeichnet, dass** die verschwenkbare Führungsschiene (7) einen Befestigungsabschnitt (26) aufweist, der der Befestigung der Führungsschiene (7) in deren Funktionsposition an einer zugeordneten Kraftfahrzeugtür (2) dient und mindestens ein Befestigungsmittel umfasst.

8. Aggregateträger nach Anspruch 6 oder 7,
**dadurch gekennzeichnet, dass** der Befestigungsabschnitt (26) einstückig an der Führungsschiene (7) ausgebildet ist.

9. Aggregateträger nach einem der Ansprüche 1 bis 8,
**dadurch gekennzeichnet, dass** dieser als Feuchtigkeitsbarriere ausgebildet ist und randseitig eine schnurförmige, gummielastische Dichtung (3) aufweist.

10. Aggregateträger nach einem der Ansprüche 1 bis 9, **dadurch gekennzeichnet, dass** dieser als Kunststoffformteil ausgebildet ist.

11. Aggregateträger nach einem der Ansprüche 1 bis 10, **dadurch gekennzeichnet, dass** dieser im Thermo-Schaumguss-Verfahren hergestellt ist, so dass er im Querschnitt betrachtet eine zellige Kernzone und im wesentlichen zellfreie Randzonen aufweist.

## Claims

1. Unit support (1) for an automotive door, comprising guide rails (6, 7) for guiding a windowpane which can be raised and lowered, wherein at least one (7) of the guide rails is pivoted on the unit support (1) in such a way that it can be rotated from a transport position into an operating position,
**characterized in that** the pivoting guide rails (7) and/or the unit support (1) comprise at least one securing means (24) by means of which the pivoting guide rail (7) can be secured against rotating into its operating position from the transport position on the unit support (1), and that another one (6) of the windowpane guide rails is integrally formed with the unit support (1).

2. The unit support according to claim 1,
**characterized in that** the securing means comprises a clamping or hooking element (24).

3. The unit support according to claim 1 or 2,
**characterized in that** the securing means comprises a hooking element (24) joined with the guide rail (7) which can be hooked into an opening (25) provided in the unit support (1) or on a projection provided on the unit support (1).

4. The unit support according to one of claims 1 to 3,
**characterized in that** the pivoting guide rail (7) is provided with a first element (19, 20) of a pivot joint which can be detachably connected with a second element (16) of a pivot joint provided on the unit support (1).

5. The unit support according to claim 4,
**characterized in that** one of the two pivot joint elements is formed as a pivot (16) comprising at least on radically extending projection (17, 18) at its head, and that the other one of the two pivot joint elements consists of an opening (20) comprising at least one enlarged portion (22, 23) associated with the projection (17, 18) of the pivot (16), wherein the enlarged portion (22, 23) of the opening (20) and the projection (17, 18) of the pivot (16) are aligned in respect one another in such a way that the two pivot joint elements (16, 20) can be connected with one another only in a position which corresponds neither to the transport position nor the operating position of the pivoted guide rail (7).

6. The unit support according to one of claims 1 to 5,
**characterized in that** the pivoted guide rail (7) comprises a mounting part (26) for mounting the guide rail (7) in its operating position to an associated automotive door (2) and comprising at least one recess or opening (27) for receiving a fastener.

7. The unit support according to one of claims 1 to 5,
**characterized in that** the pivoted guide rail (7) comprises a mounting part (26) for mounting the guide rail (7) in its operating position to an associated automotive door (2) and comprising at least one fastener.

8. The unit support according to claim 6 or 7,
**characterized in that** the mounting part (26) is formed integrally on the guide rail (7).

9. The unit support according to one of claims 1 to 8,
**characterized in that** it is designed as a humidity barrier comprising a string-shaped rubbery elastic seal (3) on the edge.

10. The unit support according to one of claims 1 to 9,
**characterized in that** it is designed as a plastics molding.

11. The unit support according to one of claims 1 to 10,
**characterized in that** it is produced by means of a thermoplastic foam injection molding method in such a way that it comprises a cellular core and substantially non-cellular marginal zones as viewed in cross section.

## Revendications

1. Support de bloc (1) pour une portière d'un véhicule automobile, avec des glissières de guidage (6, 7) pour le guidage d'une vitre ascendante et descendante, au moins l'une des glissières de guidage (7) étant montée à pivotement sur le support de bloc (1), de sorte qu'elle puisse pivoter d'une position de transport dans une position de fonctionnement, **caractérisé en ce que** la glissière de guidage pivotante (7) et / ou le support de bloc (1) présentent au moins un moyen de sécurité (24), avec lequel la glissière de guidage pivotante (7) en position de transport sur le support de bloc (1) est sécurisée contre un pivotement dans la position de fonctionnement, et **en ce qu'**une autre (6) des glissières de guidage (6, 7) de vitre est formée d'une pièce sur le support de bloc (1).

2. Support de bloc selon la revendication 1, **caractérisé en ce que** le moyen de sécurité est formé par un élément de serrage ou d'accrochage (24).

3. Support de bloc selon revendication 1 ou 2, **caractérisé en ce que** le moyen de sécurité est formé par un élément crocheté (24), qui, relié à la glissière de guidage (7), peut être accroché dans une ouverture (25), prévue dans le support de bloc (1), ou à une saillie, prévue sur le support de bloc (1).

4. Support de bloc selon l'une des revendications 1 à 3, **caractérisé en ce que** la glissière de guidage pivotante (7) est pourvue d'un premier élément d'articulation pivotante (19, 20), qui peut être relié de manière amovible à un deuxième d'articulation pivotante (16), qui est prévu sur le support de bloc (1).

5. Support de bloc selon la revendication 4, **caractérisé en ce que** l'un des deux éléments d'articulation pivotante est réalisé sous la forme d'un pivot d'articulation (16), qui présente, à son extrémité, côté tête, au moins une saillie radiale (17, 18), et **en ce que** l'autre des deux éléments d'articulation pivotante consiste en une ouverture (20), qui présente au moins une section d'élargissement (22, 23), associée à la saillie (17, 18) du pivot d'articulation (16), la section d'élargissement (22, 23) de l'ouverture (20) et la saillie (17, 18) du pivot d'articulation (16) étant orientées l'une par rapport à l'autre de sorte que les deux éléments d'articulation pivotant (16, 20) ne puissent être reliés l'un à l'autre que dans une position relative d'emboîtement, qui ne correspond ni à la position de transport ni à la position de fonctionnement de la glissière de guidage pivotante (7).

6. Support de bloc selon l'une des revendications 1 à 5, **caractérisé en ce que** la glissière de guidage pivotante (7) présente une section de fixation (26), qui sert à la fixation de la glissière de guidage (7) dans sa position de fonctionnement sur une portière de véhicule automobile (2), à laquelle elle est associée, et comprend au moins un évidement ou une ouverture (27) pour accueillir un moyen de fixation.

7. Support de bloc selon l'une des revendications 1 à 5, **caractérisé en ce que** la glissière de guidage pivotante (7) présente une section de fixation (26), qui sert à la fixation de la glissière de guidage (7), dans sa position de fonctionnement, sur une portière de véhicule automobile (2) y associée, et comprend au moins un moyen de fixation.

8. Support de bloc selon revendication 6 ou 7, **caractérisé en ce que** la section de fixation (26) est formée d'une pièce sur la glissière de guidage (7).

9. Support de bloc selon l'une des revendications 1 à 8, **caractérisé en ce que** celui-ci est formé en tant que barrière d'humidité et est pourvu, coté bord, un joint d'étanchéité (3) en forme de cordon, qui présente l'élasticité du caoutchouc.

10. Support de bloc selon l'une des revendications 1 à 9, **caractérisé en ce que** celui-ci est réalisé en tant que pièce moulée en matière plastique.

11. Support de bloc selon l'une des revendications 1 à 10, **caractérisé en ce que** celui-ci est fabriqué selon le procédé de moulage thermoplastique, de sorte que, vu en coupe transversale, il présente une zone de noyau à cellules et des zones marginales essentiellement exemptes de cellules.
